# EUROPEAN PATENT SPECIFICATION

(11) **EP 4 011 775 B1**
(45) Date of publication and mention of the grant of the patent: **10.04.2024**
(21) Application number: 21211373.2
(22) Date of filing: 30.11.2021
(51) Int. Cl.: B64D 11/06

(54) **ADJUSTABLE PASSENGER SEATING ARRANGEMENT**
VERSTELLBARE PASSAGIERSITZANORDNUNG
SIÈGE POUR PASSAGER RÉGLABLE

(30) Priority: 10.12.2020 DK PA202001390
(43) Date of publication of application: 15.06.2022
(73) Proprietor: Autoproducts ApS, 7400 Herning (DK)
(72) Inventor: Hansen, Finn, 6440 Augustenborg (DK)
(74) Representative: Larsen & Birkeholm A/S

(56) References cited:
- EP-A1- 3 100 901
- US-A1- 2011 278 398

## Description

### Technical field of the invention

The present invention relates to an adjustable passenger seating arrangement, and more specifically to an adjustable seat support.

### Background of the invention

It is well-known to provide seats in a vehicle, such as a motor vehicle or airplane, that are mounted in position on rails, or which are adapted to engage a track on the floor of the vehicle and lockable in place by way of a pair of spaced apart plates, which may be moved apart to bias the plates in a locking position. However, the locking mechanisms often demand that the user applies substantial force to engage the locking mechanism. Furthermore, it is difficult to unlock the locking mechanism without having to lie on your knees.

Documents EP3100901 and US2011278398 both disclose systems for fastening and adjusting seats on rails.

### Description of the invention

The present invention relates to an adjustable passenger seating arrangement according to claim 1.

Further details are claimed in dependent claims 2-10.

### Brief description of the figures

Figure 1 shows an adjustable passenger seating arrangement according to various embodiments of the present invention, without the presence of two seat rails, and where the first and second locking assemblies are deactivated.
Figure 2 shows the adjustable passenger seating arrangement of Figure 1, where a part of the seat support has been removed.
Figure 3 shows a bottom view of a part of the adjustable passenger seating arrangement of Figure 1.

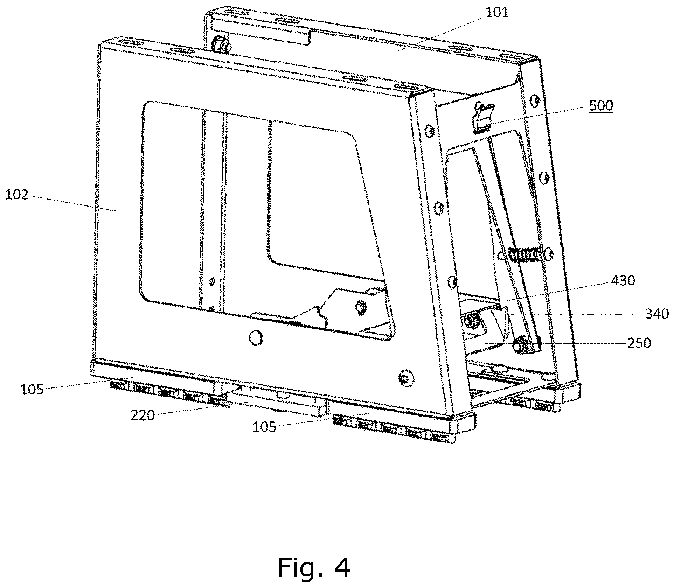

Figure 4 shows an adjustable passenger seating arrangement according to various embodiments of the present invention, without the presence of two seat rails, and where the first and second locking assemblies are activated.
Figure 5 shows the adjustable passenger seating arrangement of Figure 3, where a part of the seat support has been removed.
Figure 6 shows a pair of seat rails generally known within the art.
Figure 7 shows a cross-sectional view of Figure 6.

### Detailed description of the invention

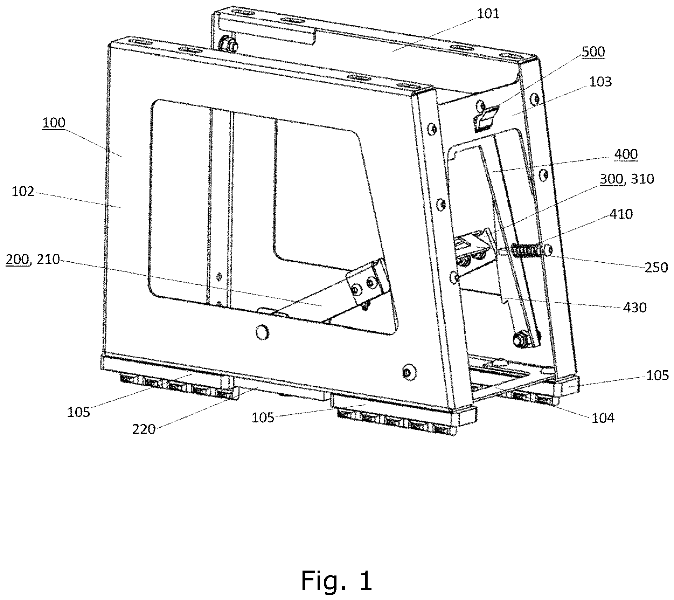

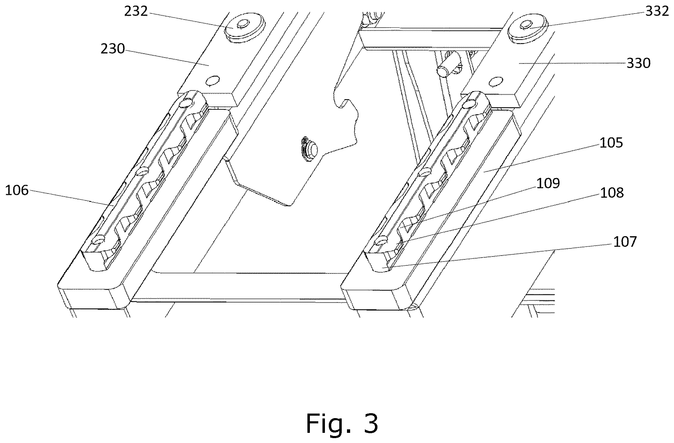

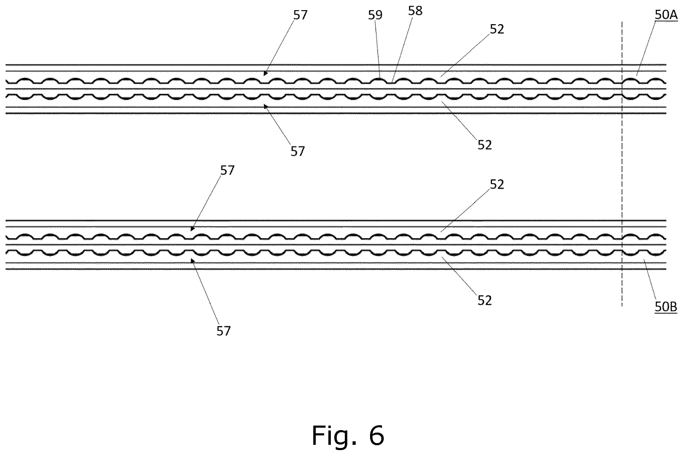

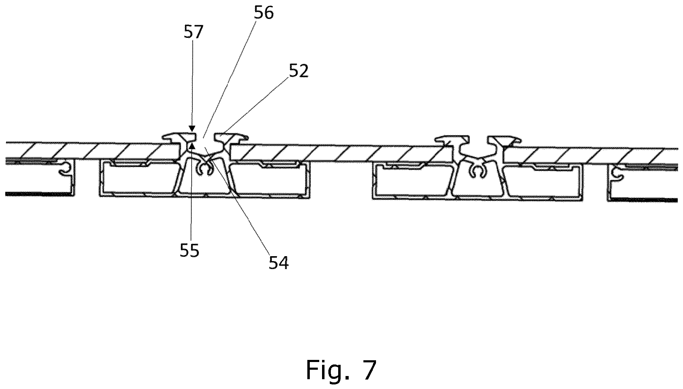

The following description is to be seen as a non-limiting example of an apparatus according to various embodiments of the present invention. The specific examples are intended for two parallel arranged seat rails 50A, 50B (Figures 6 and 7), but the invention contemplates embodiments suitable for a single seat rail or for multiple seat rails, such as three seat rails. Figure 1 shows an adjustable passenger seating arrangement according to various embodiments of the present invention, without the presence of said two seat rails. The adjustable passenger seating arrangement comprises a seat support 100 adapted for supporting a passenger seat (not shown) and for sliding within or on said seat rails. The shown apparatus is configured for seat rails 50A, 50B (Figures 6 and 7) that comprise walls with inwardly directed lips 52, and defining a central longitudinal guide channel 54 running along the length of the seat rail 50A, 50B, and a longitudinal guide slot 56 defined by said lips and running along the length of said seat rail. The guide slot 56 communicates with the guide channel 54 and has a width, which is narrower than said guide channel 54. The lips 52 are shaped with alternating protrusions 58 and recesses 59 along the length of the guide slot 56 (Figure 6). The seat support 100 is therefore shown comprising a base part 104 with two pairs of guide pins 105 each comprising a head portion 106 and a neck portion 107 (Figure 3). The head portion 106 is adapted for sliding within the guide channel 54 and the neck portion 107 is adapted for sliding within the guide slot 56. The head portion 106 is shaped with alternating protrusions 106 and recesses 109 along its length and configured such that the protrusions 106 may be aligned with the recesses 59 of the lips 52, and the protrusions 58 of the lips 52 may be aligned with the recesses 109 of the head portion 106, so that head portion 106 may be placed within the guide channel 54. The lips 52 are configured with a first contact surface 55 facing the guide channel 54, and a second contact surface 57 opposite said first contact surface 55 and facing away from said guide channel 54 (Figure 7).

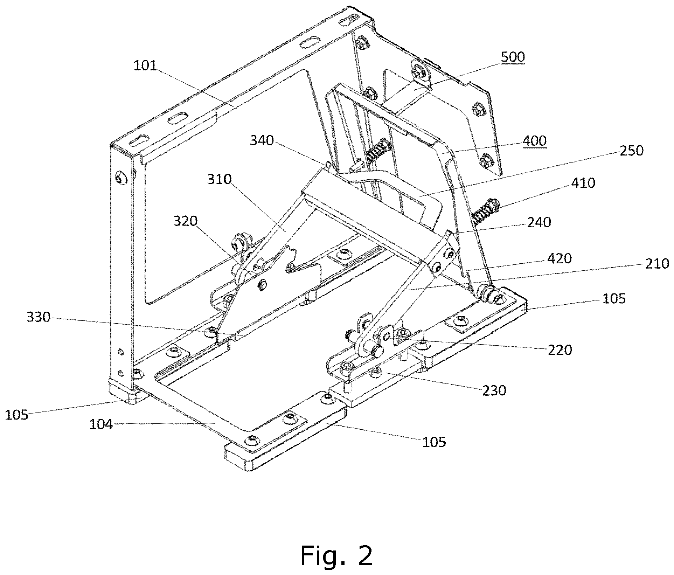

A first 200 and a second 300 locking assembly (Figure 1) are arranged in connection to said seat support 100 and are each adapted for releasably fastening of said seat support 100 to each seat rail 50. The locking assemblies 200, 300 each comprises a first mechanism adapted for engaging with each seat rail 50. The first mechanism comprises a lever arm 210, 310 pivotably connected to a side panel 101, 102 of the seat support 100 by hinges 220, 320 (best seen in Figure 2). Here, both lever arms 210, 310 are jointly configured as a foot pedal 250 with a contact surface adapted for receiving a foot. The foot pedal 250 is here also configured as a handle for use in the situation where the foot pedal needs to be manually raised. The lever arms 210, 310 are adapted for moving between a lowered position to a raised position relative to the base part 104 of the seat support 100.

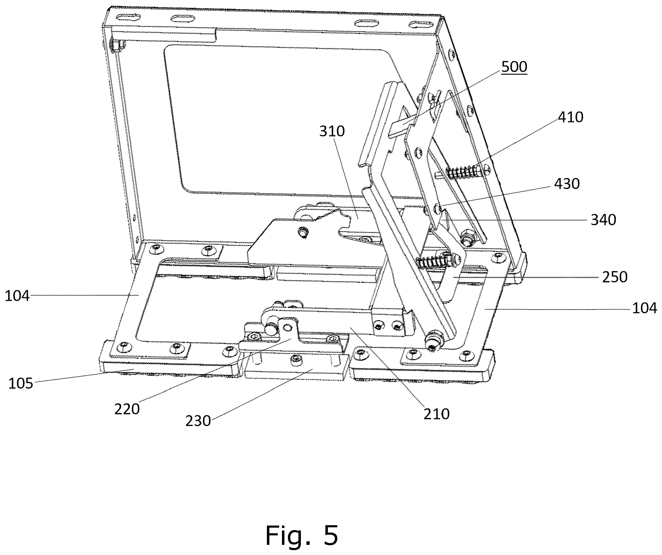

The first mechanism further comprises a push plate 230, 330 operably connected to said lever arm 210, 310, said push plate 230, 330 being adapted for abutting or engaging with said second contact surface 57 when said lever arm 210, 310 is operated into a first position, thereby lifting said one or more guide pins 105 relative to said guide channel 54, and wherein said head portion 106 is adapted for abutting or engaging with said first contact surface 55 when said lever arm 210, 310 is operated into said first position. Thereby, the push plate 230, 330 and the guide pins 105 clamp onto the seat rail 50 to engage the seat support 100 to the seat rail 50. The push plate 230, 330 is here shown with a locking pin 232, 332 (best seen in Figure 3) adapted for fitting within the above-mentioned recesses of the lips. This configuration prevents the push plate 230, 330 from displacing along the length of the seat rail. Two guide pins 105 are flanking the push plate 230, 330 on each side of the seat support 100. In general, such a configuration allows for an evenly distributed holding force on the seat support. The adjustable passenger seating arrangement also comprises a second mechanism adapted for engaging with said first mechanism, thereby keeping the first mechanism engaged with the seat rails, and adapted for disengaging from the first mechanism, thereby allowing said first mechanism to disengage from said seat rail. The second mechanism is adapted for engaging with said first mechanism when said lever arm 210, 310 is positioned in its lowered position. This mechanism may have multiple configurations but is here exemplified as a spring activated blocking unit 400. The spring activated blocking unit 400 is adapted for moving between a retracted position disengaged from said lever arm 210, 310 to a forwarded position engaged with said lever arm 210, 310. The blocking unit 400 and the lever arm 210, 310 is provided with protrusions 240, 430; 340, 440 that are configured to pairwise engage with one another when the blocking unit 400 is in its forwarded position and to disengage from one another when the spring activated blocking unit 400 is moved to its retracted position. The spring activated blocking unit 400 is shown pivotably connected to the panel sides 101, 102 of said seat support 100 and slidably connected to the lever arm 210, 310 (Figures 2 and 5). The spring activated blocking unit 400 can manually be moved to its retracted position simply by pulling it in that direction.

As a further security measure, e.g. used as a child proof means, the first locking assembly further comprises a third mechanism adapted for engaging with said second mechanism, thereby keeping said second mechanism engaged with said first mechanism. This mechanism may have multiple configurations but is here exemplified as a plate hingedly coupled to the front panel 103 of the seat support 100 and configured to block the spring activated blocking unit 400 from being moved to its retracted position. The plate may be lifted by a finger just before the spring activated blocking unit 400 is manually retracted.

### References

- 50: Seat rail
- 52: Lip
- 54: Guide channel
- 56: Guide slot
- 57: First contact surface
- 58: Protrusion
- 59: Recess
- 100: Seat support
- 101: Left panel
- 102: Right panel
- 103: Front panel
- 104: Base part
- 105: Guide pin
- 106: Protrusion
- 107: Neck portion
- 108: Head portion
- 109: Recess
- 200: First locking assembly
- 210: Lever arm
- 220: Hinge
- 230: Push plate
- 232: Locking pin
- 240: Protrusion
- 250: Foot pedal
- 300: Second locking assembly
- 310: Lever arm
- 320: Hinge
- 330: Push plate
- 332: Locking pin
- 340: Protrusion
- 400: Blocking unit
- 410: Spring
- 420: Protrusion

## Claims

1. An adjustable passenger seating arrangement comprising:
- a first floor-mounted seat rail (50) adapted to extend through at least a portion of a passenger carrying compartment;
- a seat support (100) adapted for supporting a passenger seat and for sliding within or on said seat rail (50); and
- a first locking assembly arranged in connection to said seat support (100) and adapted for releasably fastening of said seat support (100) to said first seat rail (50);
wherein said first locking assembly comprises a first mechanism adapted for engaging with said first seat rail (50), said first mechanism comprising a lever arm (210, 310) configured as a foot pedal (250) and pivotably connected to said seat support (100);
wherein said first seat rail (50) comprises walls with inwardly directed lips (52), said walls defining a) a central longitudinal guide channel (54) running along the length of said seat rail (50), and b) a longitudinal guide slot (56) defined by said lips (52) and running along the length of said seat rail (50), wherein said guide slot (56) communicates with said guide channel (54) and has a width, which is narrower than said guide channel (54), wherein said lips (52) are configured with a first contact surface (55) facing said guide channel (54), and a second contact surface (57) opposite said first contact surface (55) and facing away from said guide channel (54), wherein said seat support (100) further comprises a base part (104) with a pair of guide pins (105) each with a head portion (108) and a neck portion (107), said head portion (108) adapted for sliding within said guide channel (54) and said neck portion (107) adapted for sliding within said guide slot (56);
**characterised in that** said first mechanism further comprises a push plate (230) positioned in between said pair of guide pins (105) and being operably connected to said lever arm (210, 310), said push plate (230) being adapted for abutting or engaging with said second contact surface (57) when said lever arm (210, 310) is operated into a first position, thereby lifting said pair of guide pins (105) relative to said guide channel (54), and wherein the head portion (108) of each pair of guide pins (105) is adapted for abutting or engaging with said first contact surface (55) when said lever arm (210, 310) is operated into said first position.

2. The adjustable passenger seating arrangement according to claim 1, wherein said first locking assembly further comprises a second mechanism adapted for engaging with said first mechanism, thereby keeping said first mechanism engaged with said first seat rail (50), and adapted for disengaging from said first mechanism, thereby allowing said first mechanism to disengage from said first seat rail (50).

3. The adjustable passenger seating arrangement according to claim 2, wherein said lever arm (210, 310) is adapted for moving between a lowered position to a raised position relative to said base part (104), and wherein said second mechanism is adapted for engaging with said first mechanism when said lever arm (210, 310) is positioned in its lowered position.

4. The adjustable passenger seating arrangement according to claim 3, wherein said second mechanism comprises a spring activated blocking unit (400).

5. The adjustable passenger seating arrangement according to claim 4, wherein said spring activated blocking unit (400) is adapted for moving between a retracted position disengaged from said lever arm (210, 310) to a forwarded position engaged with said lever arm (210, 310).

6. The adjustable passenger seating arrangement according to claim 5, wherein said spring activated blocking unit (400) is pivotably connected to said seat support (100) and slidably connected to said lever arm (210, 310).

7. The adjustable passenger seating arrangement according to any one of the claims 2-6, wherein said first locking assembly further comprises a third mechanism adapted for engaging with said second mechanism, thereby keeping said second mechanism engaged with said first mechanism.

8. The adjustable passenger seating arrangement according to any one of the claims 1-7, further comprising:
- a second floor-mounted seat rail (50) adapted to extend through at least a portion of a passenger carrying compartment; and
- a second locking assembly arranged in connection to said seat support and adapted for releasably fastening of said seat support (100) to said second seat rail (50);
wherein said second locking assembly comprises a first mechanism similar with the first mechanism of the first locking assembly, but configured to operate in relation to said second seat rail (50) rather than said first seat rail (50); and wherein said first and second locking assemblies are jointly configured as a foot pedal (250).

9. The adjustable passenger seating arrangement according to any one of the claims 2-7, further comprising:
- a second floor-mounted seat rail (50) adapted to extend through at least a portion of a passenger carrying compartment; and
- a second locking assembly arranged in connection to said seat support and adapted for releasably fastening of said seat support (100) to said second seat rail (50);
wherein said second locking assembly comprises a first mechanism similar with the first mechanism of the first locking assembly, and a second mechanism similar with the second mechanism of the first locking assembly, but configured to operate in relation to said second seat rail (50) rather than said first seat rail (50); and wherein said first and second locking assemblies are jointly configured as a foot pedal (250).

10. The adjustable passenger seating arrangement according to any one of the claims 1-9, wherein the lips (52) are shaped with alternating protrusions (58) and recesses (59) along the length of the guide slot (56), and wherein the push plate (230, 330) comprises a locking pin (232, 332) adapted for fitting within the recesses (59) of the lips (52).

## Patentansprüche

1. Verstellbare Passagiersitzanordnung umfassend:
- eine erste am Boden montierte Sitzschiene (50), die so angepasst ist, dass sie sich durch mindestens einen Teil eines Passagierbeförderungsraums erstreckt;
- einen Sitzträger (100), der so angepasst ist, dass er einen Passagiersitz trägt und innerhalb oder auf der Sitzschiene (50) gleitet; und
- eine erste Verriegelungsanordnung, die in Verbindung mit dem Sitzträger (100) angebracht und zur lösbaren Befestigung des Sitzträgers (100) an der ersten Sitzschiene (50) angepasst ist;
wobei die erste Verriegelungsanordnung einen ersten zum Eingriff mit der ersten Sitzschiene (50) angepassten Mechanismus umfasst, wobei der erste Mechanismus einen Hebelarm (210, 310) umfasst, der als ein Fußpedal (250) ausgestaltet und schwenkbar mit dem Sitzträger (100) verbunden ist;
wobei die erste Sitzschiene (50) Wände mit nach innen gerichteten Lippen (52) umfasst, wobei die Wände a) einen zentralen sich entlang der Länge der Sitzschiene (50) verlaufenden Längsführungskanal (54) und b) einen durch die Lippen (52) definierten und sich entlang der Länge der Sitzschiene (50) verlaufenden Längsführungsschlitz (56) definieren, wobei der Führungsschlitz (56) mit dem Führungskanal (54) in Verbindung steht und eine Breite aufweist, die schmaler als der Führungskanal (54) ist, wobei die Lippen (52) mit einer ersten dem Führungskanal (54) zugewandten Kontaktfläche (55) und einer zweiten der ersten Kontaktfläche (55) gegenüberliegenden und dem Führungskanal (54) abgewandten Kontaktfläche (57) ausgestaltet sind, wobei der Sitzträger (100) ferner einen Basisteil (104) mit einem Paar von Führungsstiften (105) jeweils mit einem Kopfabschnitt (108) und einem Halsabschnitt (107) umfasst, wobei der Kopfabschnitt (108) zum Gleiten innerhalb des Führungskanals (54) angepasst ist, und der Halsabschnitt (107) zum Gleiten innerhalb des Führungsschlitzes (56) angepasst ist;
**dadurch gekennzeichnet, dass** der erste Mechanismus ferner eine zwischen dem Paar von Führungsstiften (105) angeordnete und mit dem Hebelarm (210, 310) wirkverbundene Schubplatte (230) umfasst, wobei die Schubplatte (230) dazu angepasst ist, an der zweiten Kontaktfläche (57) anzuliegen oder mit dieser in Eingriff zu gehen, wenn der Hebelarm (210, 310) in eine erste Position gebracht wird, wodurch das Paar von Führungsstiften (105) relativ zum Führungskanal (54) angehoben wird, und wobei der Kopfabschnitt (108) jedes Paares von Führungsstiften (105) dazu angepasst ist, an der ersten Kontaktfläche (55) anzuliegen oder mit dieser in Eingriff zu gehen, wenn der Hebelarm (210, 310) in die erste Position gebracht wird.

2. Verstellbare Passagiersitzanordnung nach Anspruch 1, wobei die erste Verriegelungsanordnung ferner einen zweiten Mechanismus umfasst, der zum Eingriff mit dem ersten Mechanismus angepasst ist, wodurch der erste Mechanismus mit der ersten Sitzschiene (50) in Eingriff bleibt, und zum Außer-Eingriff-Bringen mit dem ersten Mechanismus angepasst ist, wodurch ermöglicht wird, dass der erste Mechanismus mit der ersten Sitzschiene (50) außer Eingriff gerät.

3. Verstellbare Passagiersitzanordnung nach Anspruch 2, wobei der Hebelarm (210, 310) zum Bewegen zwischen einer abgesenkten Position und einer angehobenen Position relativ zum Basisteil (104) angepasst ist, und wobei der zweite Mechanismus zum Eingriff mit dem ersten Mechanismus angepasst ist, wenn der Hebelarm (210, 310) in seiner abgesenkten Position angeordnet ist.

4. Verstellbare Passagiersitzanordnung nach Anspruch 3, wobei der zweite Mechanismus eine federbetätigte Blockiereinheit (400) umfasst.

5. Verstellbare Passagiersitzanordnung nach Anspruch 4, wobei die federbetätigte Blockiereinheit (400) zum Bewegen zwischen einer zurückgezogenen Position, in der sie mit dem Hebelarm (210, 310) außer Eingriff gebracht wird, und einer vorwärtsgerichteten Position, in der sie mit dem Hebelarm (210, 310) in Eingriff gebracht wird, angepasst ist.

6. Verstellbare Passagiersitzanordnung nach Anspruch 5, wobei die federbetätigte Blockiereinheit (400) schwenkbar mit dem Sitzträger (100) verbunden und gleitbar mit dem Hebelarm (210, 310) verbunden ist.

7. Verstellbare Passagiersitzanordnung nach einem der Ansprüche 2 bis 6, wobei die erste Verriegelungsanordnung ferner einen dritten zum Eingriff mit dem zweiten Mechanismus angepassten Mechanismus umfasst, wodurch der zweite Mechanismus mit dem ersten Mechanismus in Eingriff bleibt.

8. Verstellbare Passagiersitzanordnung nach einem der Ansprüche 1 bis 7, ferner umfassend:
- eine zweite am Boden montierte Sitzschiene (50), die so angepasst ist, dass sie sich durch mindestens einen Teil eines Passagierbeförderungsraums erstreckt; und
- eine zweite Verriegelungsanordnung, die in Verbindung mit dem Sitzträger angebracht und zur lösbaren Befestigung des Sitzträgers (100) an der zweiten Sitzschiene (50) angepasst ist;
wobei die zweite Verriegelungsanordnung einen ersten Mechanismus umfasst, der dem ersten Mechanismus der ersten Verriegelungsanordnung ähnlich ist, jedoch dazu ausgelegt, in Bezug auf die zweite Sitzschiene (50) anstatt der ersten Sitzschiene (50) betrieben zu werden; und wobei die erste und zweite Verriegelungsanordnung gemeinsam als ein Fußpedal (250) ausgestaltet sind.

9. Verstellbare Passagiersitzanordnung nach einem der Ansprüche 2 bis 7, ferner umfassend:
- eine zweite am Boden montierte Sitzschiene (50), die so angepasst ist, dass sie sich durch mindestens einen Teil eines Passagierbeförderungsraums erstreckt; und
- eine zweite Verriegelungsanordnung, die in Verbindung mit dem Sitzträger angebracht und zur lösbaren Befestigung des Sitzträgers (100) an der zweiten Sitzschiene (50) angepasst ist;
wobei die zweite Verriegelungsanordnung einen ersten Mechanismus, der dem ersten Mechanismus der ersten Verriegelungsanordnung ähnlich ist, und einen zweiten Mechanismus, der dem zweiten Mechanismus der ersten Verriegelungsanordnung ähnlich ist, umfasst, jedoch dazu ausgelegt, in Bezug auf die zweite Sitzschiene (50) anstatt der ersten Sitzschiene (50) betrieben zu werden; und wobei die erste und zweite Verriegelungsanordnung gemeinsam als ein Fußpedal (250) ausgestaltet sind.

10. Verstellbare Passagiersitzanordnung nach einem der Ansprüche 1 bis 9, wobei die Lippen (52) mit abwechselnden Vorsprüngen (58) und Aussparungen (59) entlang der Länge des Führungsschlitzes (56) geformt sind, und wobei die Schubplatte (230, 330) einen Verriegelungsstift (232, 332) umfasst, der so angepasst ist, dass er in die Aussparungen (59) der Lippen (52) passt.

## Revendications

1. Agencement de siège pour passager réglable comprenant :
- un premier rail de siège (50) monté sur un plancher adapté pour s'étendre à travers au moins une partie d'un compartiment de transport de passagers ;
- un support de siège (100) adapté pour supporter un siège pour passager et pour coulisser dans ou sur ledit rail de siège (50) ; et
- un premier ensemble de verrouillage agencé en liaison avec ledit support de siège (100) et adapté pour fixer de manière amovible ledit support de siège (100) audit premier rail de siège (50) ;
dans lequel ledit premier ensemble de verrouillage comprend un premier mécanisme adapté pour venir en prise avec ledit premier rail de siège (50), ledit premier mécanisme comprenant un bras de levier (210, 310) conçu en tant que pédale (250) et relié de manière pivotante audit support de siège (100) ;
dans lequel ledit premier rail de siège (50) comprend des parois avec des rebords (52) dirigés vers l'intérieur, lesdites parois définissant a) un canal de guidage longitudinal central (54) s'étendant sur la longueur dudit rail de siège (50), et b) une fente de guidage longitudinale (56) définie par lesdits rebords (52) et s'étendant sur la longueur dudit rail de siège (50), dans lequel ladite fente de guidage (56) communique avec ledit canal de guidage (54) et a une largeur plus étroite que ledit canal de guidage (54), dans lequel lesdits rebords (52) sont conçus avec une première surface de contact (55) tournée vers ledit canal de guidage (54), et une seconde surface de contact (57) opposée à ladite première surface de contact (55) et orientée à l'opposé dudit canal de guidage (54), dans lequel ledit support de siège (100) comprend en outre une partie de base (104) avec une paire de tiges de guidage (105) ayant chacune une partie tête (108) et une partie col (107), ladite partie tête (108) étant adaptée pour coulisser à l'intérieur dudit canal de guidage (54) et ladite partie col (107) étant adaptée pour coulisser à l'intérieur de ladite fente de guidage (56) ;
**caractérisé en ce que**
ledit premier mécanisme comprend en outre une plaque de poussée (230) positionnée entre ladite paire de tiges de guidage (105) et étant reliée fonctionnellement audit bras de levier (210, 310), ladite plaque de poussée (230) étant adaptée pour venir en butée ou en prise avec ladite seconde surface de contact (57) lorsque ledit bras de levier (210, 310) est actionné dans une première position, soulevant ainsi ladite paire de tiges de guidage (105) par rapport audit canal de guidage (54), et dans lequel la partie tête (108) de chaque paire de tiges de guidage (105) est adaptée pour venir en butée ou en prise avec ladite première surface de contact (55) lorsque ledit bras de levier (210, 310) est actionné dans ladite première position.

2. Agencement de siège pour passager réglable selon la revendication 1, dans lequel ledit premier ensemble de verrouillage comprend en outre un second mécanisme adapté pour venir en prise avec ledit premier mécanisme, maintenant ainsi ledit premier mécanisme en prise avec ledit premier rail de siège (50), et adapté pour se désengager dudit premier mécanisme, permettant ainsi audit premier mécanisme de se désengager dudit premier rail de siège (50).

3. Agencement de siège pour passager réglable selon la revendication 2, dans lequel ledit bras de levier (210, 310) est adapté pour se déplacer entre une position abaissée et une position relevée par rapport à ladite partie de base (104), et dans lequel ledit second mécanisme est adapté pour venir en prise avec ledit premier mécanisme lorsque ledit bras de levier (210, 310) est positionné dans sa position abaissée.

4. Agencement de siège pour passager réglable selon la revendication 3, dans lequel ledit second mécanisme comprend une unité de blocage (400) activée par ressort.

5. Agencement de siège pour passager réglable selon la revendication 4, dans lequel ladite unité de blocage (400) activée par ressort est adaptée pour se déplacer entre une position rétractée désengagée dudit bras de levier (210, 310) et une position avancée en prise avec ledit bras de levier (210, 310).

6. Agencement de siège pour passager réglable selon la revendication 5, dans lequel ladite unité de blocage (400) activée par ressort est reliée de manière pivotante audit support de siège (100) et reliée de manière coulissante audit bras de levier (210, 310).

7. Agencement de siège pour passager réglable selon l'une quelconque des revendications 2 à 6, dans lequel ledit premier ensemble de verrouillage comprend en outre un troisième mécanisme adapté pour venir en prise avec ledit second mécanisme, maintenant ainsi ledit second mécanisme en prise avec ledit premier mécanisme.

8. Agencement de siège pour passager réglable selon l'une quelconque des revendications 1 à 7, comprenant en outre :
- un second rail de siège (50) monté sur un plancher adapté pour s'étendre à travers au moins une partie d'un compartiment de transport de passagers ; et
- un second ensemble de verrouillage agencé en liaison avec ledit support de siège et adapté pour fixer de manière amovible ledit support de siège (100) audit second rail de siège (50) ;
dans lequel ledit second ensemble de verrouillage comprend un premier mécanisme similaire au premier mécanisme du premier ensemble de verrouillage, mais conçu pour fonctionner en relation avec ledit second rail de siège (50) plutôt qu'avec ledit premier rail de siège (50) ; et dans lequel lesdits premier et second ensembles de verrouillage sont conçus conjointement en tant que pédale (250).

9. Agencement de siège pour passager réglable selon l'une quelconque des revendications 2 à 7, comprenant en outre :
- un second rail de siège (50) monté sur un plancher adapté pour s'étendre à travers au moins une partie d'un compartiment de transport de passagers ; et
- un second ensemble de verrouillage agencé en liaison avec ledit support de siège et adapté pour fixer de manière amovible ledit support de siège (100) audit second rail de siège (50) ;
dans lequel ledit second ensemble de verrouillage comprend un premier mécanisme similaire au premier mécanisme du premier ensemble de verrouillage, et un second mécanisme similaire au second mécanisme du premier ensemble de verrouillage, mais conçu pour fonctionner en relation avec ledit second rail de siège (50) plutôt qu'avec ledit premier rail de siège (50) ; et dans lequel lesdits premier et second ensembles de verrouillage sont conçus conjointement en tant que pédale (250).

10. Agencement de siège pour passager réglable selon l'une quelconque des revendications 1 à 9, dans lequel les rebords (52) sont formés d'une alternance de saillies (58) et d'évidements (59) sur la longueur de la fente de guidage (56), et dans lequel la plaque de poussée (230, 330) comprend une goupille de verrouillage (232, 332) adaptée pour s'insérer dans les évidements (59) des rebords (52).
